# EUROPEAN PATENT SPECIFICATION

(11) **EP 3 298 891 B1**
(45) Date of publication and mention of the grant of the patent: **07.08.2019**
(21) Application number: 16190038.6
(22) Date of filing: 22.09.2016
(51) Int. Cl.: A01M 23/30

(54) **SNAP TRAP ENCLOSURE ADAPTED FOR REDUCING NON-TARGET BYCATCHES**
ZUR REDUZIERUNG VON UNGEWOLLTEM BEIFANG ANGEPASSTES SCHLAGFALLENGEHÄUSE
ENCEINTE DE PIÈGE À RATS CONÇUE POUR RÉDUIRE LES CAPTURES ACCESSOIRES NON CIBLÉES

(43) Date of publication of application: 28.03.2018
(73) Proprietor: Camro A/S, 9610 Nørager (DK)
(72) Inventor: Sørensen, Kurt, 9610 Nørager (DK)
(74) Representative: Larsen & Birkeholm A/S

(56) References cited:
- DE-U1-202014 007 793
- GB-A- 2 422 084
- US-A- 1 349 177
- US-A1- 2011 072 709

## Description

### Technical field of the invention

The present invention relates to the field of traps for rats and mice, and in particular relates to traps in a safe box for use on the ground.

### Background of the invention

Inherent flaws in the basic design of snap-traps to date create problems with non-target bycatch issues, when birds, lizards, snakes, kittens, etc. are caught in traps set for pests, inciting negative public reaction. Other types of traps, such as live capture cage traps and leg-hold traps, have the disadvantage of being much bulkier and/or of heavy construction. They merely restrain rather than kill the animals, and unless checked regularly at short time intervals will cause captured animals unnecessary stress and suffering. As concern for animal rights grows worldwide, and international animal welfare regulations become more stringent, particularly in relation to perceived indiscriminate use of toxins and inefficient traps, the number and type of traps available is diminishing.

US 2011/072709 A1 discloses a rodent trap.

### Object of the Invention

The objective of the present invention is to provide a snap trap enclosure adapted for reducing non-target bycatches.

### Description of the Invention

The present invention relates to a snap trap enclosure for placement on the ground, the snap trap enclosure comprising:
- a housing with a rat and/or mouse entry opening positioned in the side wall; and
- a snap trap positioned within the housing; wherein the housing further comprises a tunnel extending from the rat and/or mouse entry opening and towards the snap trap; wherein a plate of a material suitable for a rat and/or mouse to gnaw through is blocking the tunnel such that a rat and/or mouse cannot reach the snap trap without gnawing through said plate.

The housing may be made from any material, such as metal or plastic.

In the present context, the term "tunnel" is to be understood very broadly, including corridors, channels, and similar tunnel-like structures.

Non-target bycatches, such as birds, lizards, snakes, snails, kittens, or the like, are not prone to pass the plate by destroying it. Rather, they will quickly give up, and leave the housing through the rat and/or mouse entry opening.

A plate of a material suitable for a rat and/or mouse to gnaw through may be of many types, such as a material comprising or consisting of a polymer material, a starch material, a lignin material, such as cardboard, a protein material, or the like. Preferably, the material is un-dissolvable by snails.

In one or more embodiments, the tunnel is configured with an open bottom, such that a rat and/or mouse within the tunnel is walking on the ground on which the snap trap enclosure is positioned. This configuration makes the rat and/or mouse feel more safe, and thereby more prone to stay within the tunnel.

In one or more embodiments, the plate is positioned within the tunnel at a distance from the rat and/or mouse entry opening such that a rat and/or mouse can enter the tunnel without having to gnaw through the plate. Such a distance may be at least 7 cm inside the tunnel, such as at least 8 cm inside the tunnel, such as at least 9 cm inside the tunnel, such as at least 10 cm inside the tunnel, such as at least 11 cm inside the tunnel, such as at least 12 cm inside the tunnel, such as at least 13 cm inside the tunnel, such as at least 14 cm inside the tunnel, such as at least 15 cm inside the tunnel, such as at least 20 cm inside the tunnel.

In one or more embodiments, the plate is perforated with holes and/or slits/slots. The holes and/or slits/slots have two purposes. The scent from the bait in the snap trap and/or scent attractant positioned within the tunnel must reach the outside of the snap trap enclosure to lure the mouse and/or rat. Furthermore, the mouse and/or rat must be able to position its incisors in a hole and/or slit to be able to gnaw through the plate.

In one or more embodiments, the holes have a diameter of 3-8 mm, preferably about 5 mm, such as within the range of 4-7 mm, e.g. 5-6 mm.

In one or more embodiments, the slits/slots have a width of 3-8 mm, preferably about 5 mm, such as within the range of 4-7 mm, e.g. 5-6 mm.

In one or more embodiments, a scent attractant is positioned in the tunnel in a position between the plate and the snap trap.

In one or more embodiments, a scent attractant is positioned in the tunnel in a position between the plate and the snap trap; wherein the scent attractant is sized and configured such that a rat and/or mouse can pass it in the tunnel and move unhindered towards the snap trap.

In one or more embodiments, the housing further comprises a barbed slit being sized and configured for receiving the plate. This configuration makes it impossible for a rat and/or mouse to move the plate, e.g. to move it upwards, and pass underneath.

In one or more embodiments, the plate is made of a water-resistant cardboard material.

In one or more embodiments, the thickness of the plate is within the range of 1-3 mm.

In one or more embodiments, the housing comprises two rat and/or mouse entry openings leading into opposite ends of the tunnel leading to the snap trap, and wherein a plate is blocking the tunnel on each side of the snap trap, such that a rat and/or mouse cannot reach the snap trap without gnawing through said plate. Since rats and mice tend to crawl along the outer wall of a building, it is important that they can enter a snap trap enclosure positioned against a wall of a building from both sides.

The dimensions of the rat and/or mouse entry opening are important. A rat is not prone to enter a narrow entry opening below 40 mm.

In one or more embodiments, the rat and/or mouse entry opening is sized and configured to leave an opening with a free height of at least 40 mm, such as within the range of 40-100 mm, e.g. at least 45 mm, such as within the range of 45-95 mm, e.g. at least 50 mm, such as within the range of 50-90 mm, e.g. at least 55 mm, such as within the range of 55-85 mm, e.g. at least 60 mm, such as within the range of 60-80 mm, e.g. at least 65 mm, such as within the range of 70-75 mm, e.g. at least 70 mm.

In one or more embodiments, the rat and/or mouse entry opening is sized and configured to leave an opening with a clear width of at least 40 mm, such as within the range of 40-100 mm, e.g. at least 45 mm, such as within the range of 45-95 mm, e.g. at least 50 mm, such as within the range of 50-90 mm, e.g. at least 55 mm, such as within the range of 55-85 mm, e.g. at least 60 mm, such as within the range of 60-80 mm, e.g. at least 65 mm, such as within the range of 70-75 mm, e.g. at least 70 mm.

In one or more embodiments, the snap trap enclosure comprises means for securing the housing to the ground and/or to a wall near the ground, to avoid that the snap trap enclosure can be turned on its side. Such means may be bolts or earth anchors.

In one or more embodiments, a part of the side wall is configured as a door/lid with a lock for restricted access to the snap trap located within the housing.

Advantageously a signal indicating the activation of the snap trap is transmitted wirelessly to a receiving device. Hereby wired electrical connections between the snap trap enclosure and a communication device, placed at a distance from the snap trap enclosure, may be avoided. The communication device eventually has a radio module enabling the device to send SMS messages to a computer.

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

It should be noted that embodiments and features described in the context of one of the aspects of the present invention also apply to the other aspects of the invention.

### Brief description of the figures

Figure 1 is a perspective view of a snap trap enclosure in accordance with various embodiments of the invention;
Figure 2 is a perspective view of a snap trap enclosure in accordance with various embodiments of the invention, and where the top lid and side walls have been removed; and
Figure 3 is a top view of a snap trap enclosure in accordance with various embodiments of the invention, and where the top lid has been removed.

### References

- 100: Snap trap enclosure
- 200: Housing
- 210: Rat and/or mouse entry opening
- 220: Side wall
- 230: Tunnel
- 240: Barbed slit
- 300: Snap trap
- 400: Plate
- 410: Hole
- 500: Scent attractant
- 600: Transmitter

### Detailed Description of the Invention

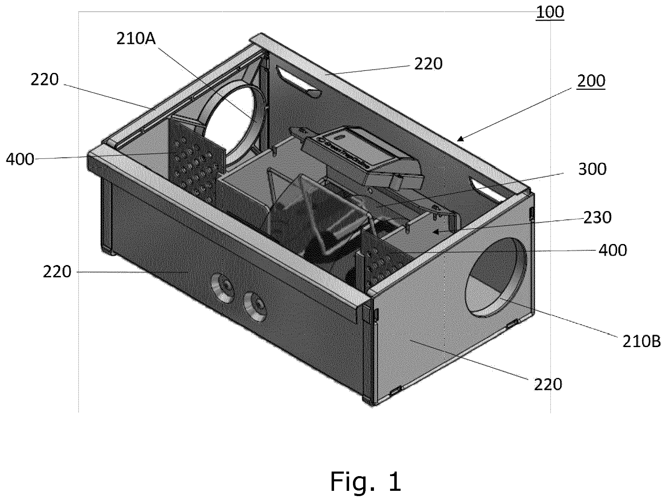

Figure 1 is a perspective view of a snap trap enclosure 100 in accordance with various embodiments of the invention, and where the top lid has been removed. The snap trap enclosure 100 comprises a housing 200 and a snap trap 300 positioned within the housing 200. The housing comprises two rat and/or mouse entry openings 210A, 210B positioned in the side walls 220, and leading into opposite ends of a tunnel 230 leading to the snap trap 300. A plate 400 is blocking the tunnel 230 on each side of the snap trap 300, such that a rat and/or mouse cannot reach the snap trap 300 without gnawing through said plate 400. The plate 400 is positioned within the tunnel at a distance from the rat and/or mouse entry opening 210A, 210B such that a rat and/or mouse can enter the tunnel without having to gnaw through the plate 400.

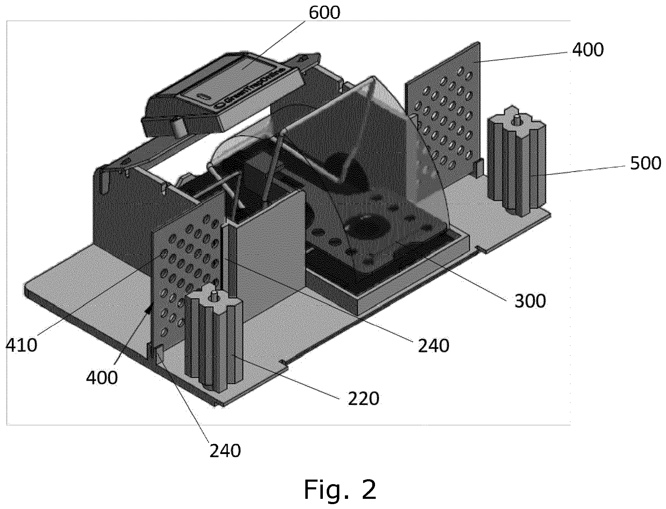

Figure 2 is a perspective view of a snap trap enclosure 100 in accordance with various embodiments of the invention, and where the top lid and side walls have been removed. The plate 400 is shown with perforated with holes 410, and a scent attractant 500 is positioned in the tunnel 230 in a position between the plate 400 and the snap trap 300. The scent attractant 500 is sized and configured such that a rat and/or mouse can pass it in the tunnel 230 and move unhindered towards the snap trap 300, wherein a bait is positioned.

The housing 200 further comprises a barbed slit 240 being sized and configured for receiving the plate 400.

A transmitter 600 is also shown. The transmitter is configured for transmitting a signal indicating the activation of the snap trap wirelessly to a receiving device.

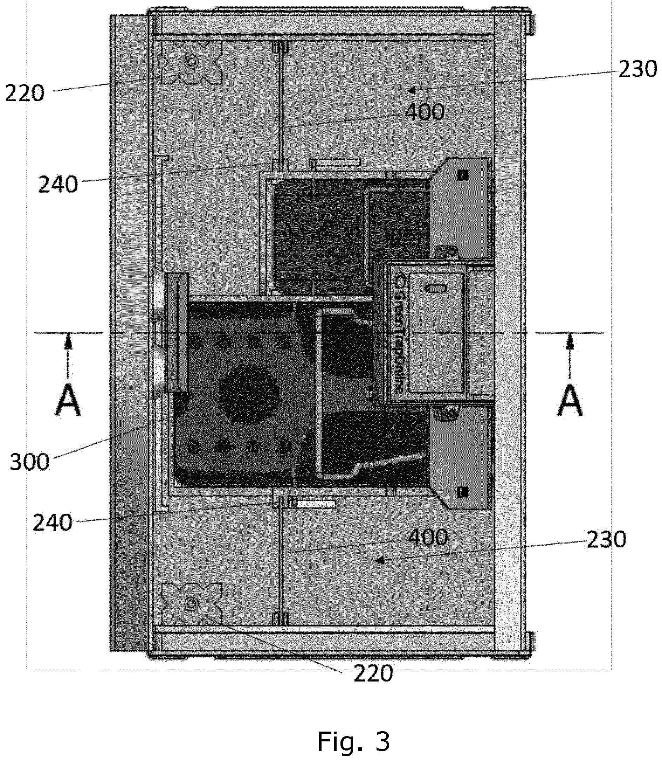

Figure 3 is a top view of a snap trap enclosure in accordance with various embodiments of the invention, and where the top lid has been removed. Here, a part of the snap trap 300 is extending into the C-shaped tunnel 230.

## Claims

1. A snap trap enclosure (100) for placement on the ground, the snap trap enclosure (100) comprising:
- a housing (200) with a rat and/or mouse entry opening (210) positioned in the side wall (220); and
- a snap trap (300) positioned within the housing (200); wherein the housing (200) further comprises a tunnel (230) extending from the rat and/or mouse entry opening (210) and towards the snap trap (300);
**characterized in that** a plate (400) of a material suitable for a rat and/or mouse to gnaw through is blocking the tunnel (230) such that a rat and/or mouse cannot reach the snap trap (300) without gnawing through said plate (400).

2. A snap trap enclosure (100) according to claim 1, **characterized in that** the plate (400) is positioned within the tunnel at a distance from the rat and/or mouse entry opening (210) such that a rat and/or mouse can enter the tunnel without having to gnaw through the plate (400).

3. A snap trap enclosure (100) according to any one of the claims 1-2, **characterized in that** the plate (400) is perforated with holes (410) and/or slots.

4. A snap trap enclosure (100) according to claim 3, **characterized in that** the holes (410) have a diameter of 3-8 mm, preferably about 5 mm.

5. A snap trap enclosure (100) according to claim 3, **characterized in that** the slots have a width of 3-8 mm, preferably about 5 mm.

6. A snap trap enclosure (100) according to any one of the claims 1-5, **characterized in that** a scent attractant (500) is positioned in the tunnel (230) in a position between the plate (400) and the snap trap (300); wherein the scent attractant (500) is sized and configured such that a rat and/or mouse can pass it in the tunnel and move unhindered towards the snap trap (300).

7. A snap trap enclosure (100) according to any one of the claims 1-6, **characterized in that** the housing (200) further comprises a barbed slit (240) being sized and configured for receiving the plate (400).

8. A snap trap enclosure (100) according to any one of the claims 1-7, **characterized in that** the plate (400) is made of a water-resistant cardboard material.

9. A snap trap enclosure (100) according to any one of the claims 1-8, **characterized in that** the thickness of the plate (400) is within the range of 1-3 mm.

10. A snap trap enclosure (100) according to any one of the claims 1-9, **characterized in that** the housing comprises two rat and/or mouse entry openings (210A, 210B) leading into opposite ends of the tunnel (230) leading to the snap trap (300), and wherein a plate (400) is blocking the tunnel (230) on each side of the snap trap (300), such that a rat and/or mouse cannot reach the snap trap (300) without gnawing through said plate (400).

## Patentansprüche

1. Schlagfallengehäuse (100) zur Platzierung auf dem Boden, wobei das Schlagfallengehäuse (100) Folgendes umfasst:
- einen Körper (200) mit einer Eingangsöffnung (210) für eine Ratte und/oder Maus, die sich in der Seitenwand (220) befindet; und
- eine Schlagfalle (300), die sich in dem Körper (200) befindet; wobei der Körper (200) ferner einen Tunnel (230) umfasst, der sich von der Eingangsöffnung (210) für eine Ratte und/oder Maus und in Richtung der Schlagfalle (300) erstreckt;
**dadurch gekennzeichnet, dass** eine Platte (400), die aus einem Material besteht, das dazu geeignet ist, von einer Ratte und/oder Maus durchgenagt zu werden, den Tunnel (230) blockiert, sodass eine Ratte und/oder Maus die Schlagfalle (300) nicht erreichen kann, ohne die Platte (400) durchzunagen.

2. Schlagfallengehäuse (100) nach Anspruch 1, **dadurch gekennzeichnet, dass** sich die Platte (400) in dem Tunnel in einem Abstand zu der Eingangsöffnung (210) für eine Ratte und/oder Maus befindet, sodass eine Ratte und/oder in den Tunnel kommen kann, ohne dass die Platte (400) durchgenagt werden muss.

3. Schlagfallengehäuse (100) nach einem der Ansprüche 1-2, **dadurch gekennzeichnet, dass** die Platte (400) mit Löchern (410) und/oder Schlitzen perforiert ist.

4. Schlagfallengehäuse (100) nach Anspruch 3, **dadurch gekennzeichnet, dass** die Löcher (410) einen Durchmesser von 3-8 mm und vorzugsweise etwa 5 mm aufweisen.

5. Schlagfallengehäuse (100) nach Anspruch 3, **dadurch gekennzeichnet, dass** die Schlitze eine Breite von 3-8 mm und vorzugsweise etwa 5 mm aufweisen.

6. Schlagfallengehäuse (100) nach einem der Ansprüche 1-5, **dadurch gekennzeichnet, dass** ein Duft mit Lockwirkung (500) in den Tunnel (230) an einer Position zwischen der Platte (400) und der Schlagfalle (300) positioniert wird; wobei der Duft mit Lockwirkung (500) derart bemessen und konfiguriert ist, dass eine Ratte und/oder Maus in dem Tunnel daran vorbeikommt und sich ungehindert in Richtung der Schlagfalle (300) bewegen kann.

7. Schlagfallengehäuse (100) nach einem der Ansprüche 1-6, **dadurch gekennzeichnet, dass** der Körper (200) ferner einen mit Widerhaken versehenen Schlitz (240) aufweist, der bemessen und konfiguriert ist, um die Platte (400) aufzunehmen.

8. Schlagfallengehäuse (100) nach einem der Ansprüche 1-7, **dadurch gekennzeichnet, dass** die Platte (400) aus einem wasserresistenten Kartonmaterial gefertigt ist.

9. Schlagfallengehäuse (100) nach einem der Ansprüche 1-8, **dadurch gekennzeichnet, dass** die Dicke der Platte (400) im Bereich von 1-3 mm liegt.

10. Schlagfallengehäuse (100) nach einem der Ansprüche 1-9, **dadurch gekennzeichnet, dass** der Körper zwei Eingangsöffnungen (210A, 210B) für eine Ratte und/oder Maus umfasst, die in entgegengesetzte Enden des Tunnels (230) führen, die zur Schnappfalle (300) führen, und wobei eine Platte (400) den Tunnel (230) an jeder Seite der Schnappfalle (300) blockiert, sodass eine Ratte und/oder Maus die Schlagfalle (300) nicht erreichen kann, ohne die Platte (400) durchzunagen.

## Revendications

1. Enceinte de piège à rats (100) destinée à être placée sur le sol, l'enceinte de piège à rats (100) comprenant :
- un logement (200) doté d'une ouverture d'entrée de rat et/ou de souris (210) positionnée dans la paroi latérale (220) ; et
- un piège à rats (300) positionné à l'intérieur du logement (200) ; dans laquelle le logement (200) comprend en outre un tunnel (230) s'étendant depuis l'ouverture d'entrée de rat et/ou de souris (210) et vers le piège à rats (300) ;
**caractérisée en ce qu'**une plaque (400) d'un matériau adapté pour qu'un rat et/ou une souris puisse le ronger bloque le tunnel (230) de telle sorte qu'un rat et/ou une souris ne puisse pas atteindre le piège à rats (300) sans ronger ladite plaque (400).

2. Enceinte de piège à rats (100) selon la revendication 1, **caractérisée en ce que** la plaque (400) est positionnée à l'intérieur du tunnel à une distance de l'ouverture d'entrée de rat et/ou de souris (210) telle qu'un rat et/ou une souris peut pénétrer dans le tunnel sans être obligé de ronger la plaque (400).

3. Enceinte de piège à rats (100) selon l'une quelconque des revendications 1 et 2, **caractérisée en ce que** la plaque (400) est perforée de trous (410) et/ou de fentes.

4. Enceinte de piège à rats (100) selon la revendication 3, **caractérisée en ce que** les trous (410) ont un diamètre de 3 à 8 mm, de préférence d'environ 5 mm.

5. Enceinte de piège à rats (100) selon la revendication 3, **caractérisée en ce que** les fentes ont une largeur de 3 à 8 mm, de préférence d'environ 5 mm.

6. Enceinte de piège à rats (100) selon l'une quelconque des revendications 1 à 5, **caractérisée en ce qu'**une substance attractive odorante (500) est positionnée dans le tunnel (230) dans une position entre la plaque (400) et le piège à rats (300) ; dans laquelle la substance attractive odorante (500) est dimensionnée et configurée de telle sorte qu'un rat et/ou une souris peut la faire passer dans le tunnel et se déplacer librement vers le piège à rats (300).

7. Enceinte de piège à rats (100) selon l'une quelconque des revendications 1 à 6, **caractérisée en ce que** le logement (200) comprend en outre une fente à barbelure (240) dimensionnée et configurée pour recevoir la plaque (400).

8. Enceinte de piège à rats (100) selon l'une quelconque des revendications 1 à 7, **caractérisée en ce que** la plaque (400) est composée d'un matériau de carton hydrorésistant.

9. Enceinte de piège à rats (100) selon l'une quelconque des revendications 1 à 8, **caractérisée en ce que** l'épaisseur de la plaque (400) est dans la plage de 1 à 3 mm.

10. Enceinte de piège à rats (100) selon l'une quelconque des revendications 1 à 9, **caractérisée en ce que** le logement comprend deux ouvertures d'entrée de rat et/ou de souris (210A, 210B) menant à des extrémités opposées du tunnel (230) menant au piège à rats (300), et dans laquelle une plaque (400) bloque le tunnel (230) sur chaque côté du piège à rats (300), de telle sorte qu'un rat et/ou une souris ne peut pas atteindre le piège à rats (300) sans ronger ladite plaque (400) .
